# EUROPÄISCHE PATENTANMELDUNG

(11) **EP 2 423 546 A2**
(43) Veröffentlichungstag der Anmeldung: **29.02.2012**
(21) Anmeldenummer: 11006903.6
(22) Anmeldetag: 23.08.2011
(51) Int. Cl.: F16K 27/02

(54) **Ventil, insbesondere Schlauchanschlussventil**

(30) Priorität: 31.08.2010 DE 202010012012 U
(71) Anmelder: AWG Fittings GmbH, 89537 Giengen/Brenz (DE)
(72) Erfinder: Unrath, Wilfried, 89547 Gerstetten (DE)
(74) Vertreter: Prinz & Partner

(57) **Zusammenfassung**

Ein Schlauchanschlussventil (10) hat ein einstückiges Ventilgehäuse (12), eine Ventilspindel (26), die im Ventilgehäuse (12) angebracht ist, einen Ventilteller (22), der an der Ventilspindel (26) angebracht ist, und einen Ventilsitz (20), mit dem der Ventilteller (22) zusammenwirken kann. Der Ventilsitz (20) ist an einem Anschlussteil (40) gebildet, das am Ventilgehäuse (12) angebracht ist.

## Beschreibung

Die Erfindung betrifft ein Schlauchanschlussventil, das bei stationären Feuerlöschanlagen eingesetzt wird.

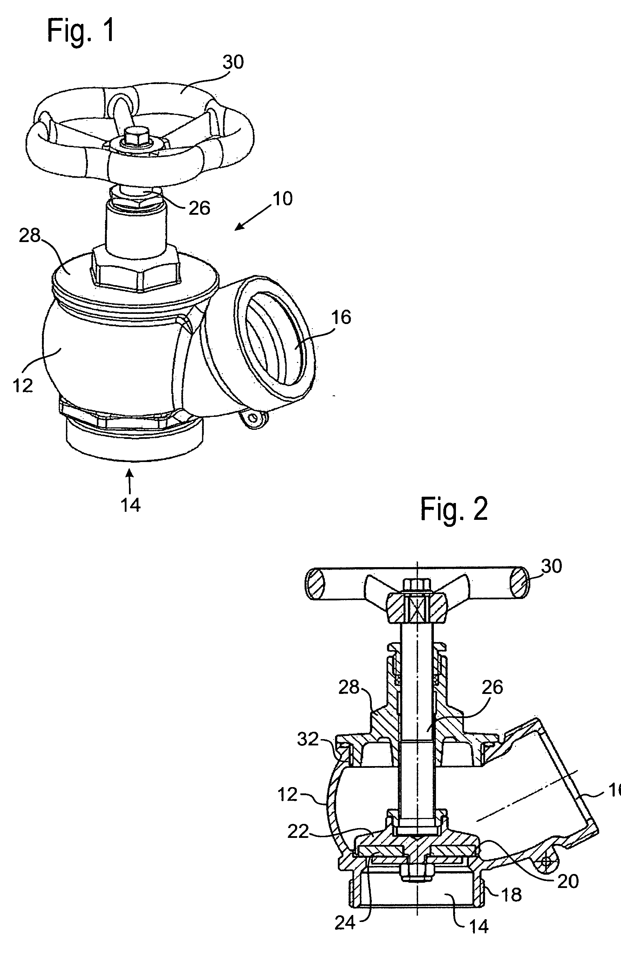

Üblicherweise werden dort genormte Schlauchanschlussventile nach DIN 14461-3 eingesetzt, deren Aufbau nachfolgend anhand der Figuren 1 und 2 erläutert wird. Das Schlauchanschlussventil 10 enthält ein Ventilgehäuse 12, das mit einem Ventileingang 14 und einem Ventilausgang 16 versehen ist. Der Ventileingang wird mit einer stationären Wasserversorgung verbunden, beispielsweise mittels einer Schraubmuffe, die auf ein Gewinde 18 aufgeschraubt wird, das am Ventilgehäuse 12 vorgesehen ist. Im Ventilgehäuse 12 ist ein Ventilsitz 20 vorgesehen, mit dem ein Ventilteller 22 zusammenwirken kann. Der Ventilteller 22 ist mit einer Gummidichtung 24 versehen und an einer Ventilspindel 26 angebracht, die in einem Ventiloberteil 28 gelagert ist. Am vom Ventilteller 22 abgewandten Ende der Ventilspindel 26 ist ein Handrad 30 angebracht, sodass die Ventilspindel 26 relativ zum Ventiloberteil 28 verdreht werden kann. Durch Drehen der Ventilspindel 26 kann der Ventilteller 22 fest gegen den Ventilsitz 20 gedrückt werden, wodurch das Ventil geschlossen ist, oder vom Ventilsitz zurückgezogen werden, um das Ventil zu öffnen.

Das Ventiloberteil 28 ist gemäß der oben genannten Norm aus Messing hergestellt. Die Norm schreibt weiterhin vor, dass das Ventiloberteil 28 austauschbar sein muss, um die Schlauchanschlussventile warten oder reparieren zu können. Zu diesem Zweck ist das Ventiloberteil 28 mit einem Außengewinde 32 versehen, das in ein komplementäres Gewinde im Ventilgehäuse 12 eingeschraubt wird. Messing ist allerdings unter bestimmten Umständen anfällig auf Spannungsrisskorrosion. Insbesondere wenn das Ventiloberteil 28 von einem Monteur über den dafür vorgesehenen Sechskant mit zu viel Drehmoment in das Ventilgehäuse 12 eingeschraubt wird, treten Spannungen auf, die zu Spannungsrisskorrosion und schließlich zu einem Versagen des Ventiloberteils 28 führen kann. Dieses Problem wird noch verschärft, wenn ein Monteur zur Demontage oder Montage des Ventiloberteils 28 eine Verlängerung an den verwendeten Gabelschlüssel oder die Rohrzange ansetzt, um beispielsweise bei einer schwergängigen Schraubverbindung mehr Kraft aufbringen zu können.

Wenn dieses Versagen bei einem Schlauchanschlussventil auftritt, das an eine ständig unter Trinkwasserleitungsdruck stehende Leitung angeschlossen ist, treten unkontrolliert hohe Wassermengen aus dem defekten Schlauchanschlussventil aus. Dies kann in Gebäuden zu Wasserschäden mit erheblichen finanziellen Folgen führen. Hinzu kommt, dass der Defekt oft in der Nacht auftritt, da hier der Wasserleitungsdruck üblicherweise etwas höher ist als am Tage. Dies führt dazu, dass im Falle eines Defekts das Wasser unter Umständen über viele Stunden unbemerkt austreten kann.

Es kann allerdings auch bereits beim Hersteller passieren, dass das Ventiloberteil 28 mit einem zu hohen Drehmoment eingeschraubt wird, beispielsweise wenn das Ventiloberteil maschinell montiert wird. Ein solches Ventil hält zwar bei der Warenendkontrolle einem Testdruck von beispielsweise 40 bar stand. Die Spannungsrisskorrosion kann allerdings dazu führen, dass das Ventiloberteil nach einer Einsatzdauer von nur 4 bis 8 Wochen bereits einem Druck von nur 8 bar nicht mehr standhalten kann.

Die Aufgabe der Erfindung besteht darin, das bekannte Schlauchanschlussventil dahin gehend weiterzubilden, dass das Risiko eines plötzlichen Versagens verringert oder vollständig vermieden ist.

Zur Lösung dieser Aufgabe ist erfindungsgemäß ein Schlauchanschlussventil vorgesehen mit einem einstückigen Ventilgehäuse, einer Ventilspindel, die im Ventilgehäuse angebracht ist, einem Ventilteller, der an der Ventilspindel angebracht ist, und einem Ventilsitz, mit dem der Ventilteller zusammenwirken kann, wobei der Ventilsitz an einem Anschlussteil gebildet ist, das am Ventilgehäuse angebracht ist. Die Erfindung beruht auf dem Grundgedanken, sich vom Konzept des austauschbaren Ventiloberteils vollständig zu lösen und die Ventilspindel im Ventilgehäuse selbst anzubringen. Auf diese Weise entfällt das Risiko, dass durch ein unzulässig hohes Einschraubmoment ein elementarer Bestandteil des Ventilgehäuses beschädigt wird. Gleichzeitig kann das Schlauchanschlussventil gut montiert werden, da der Ventilsitz nach der Montage des Ventiltellers an der Ventilspindel von außen in das Ventilgehäuse eingebracht werden kann.

Zur Anbringung des Anschlussteils am Ventilgehäuse wird vorzugsweise eine Formschlussverbindung verwendet. Dabei kann insbesondere vorgesehen sein, dass das Anschlussteil mit dem Ventilgehäuse verschraubt wird. Dies ermöglicht, das Anschlussteil mit geringem Aufwand, jedoch zuverlässig am Ventilgehäuse anzubringen.

Vorzugsweise ist dabei eine Klebeverbindung vorgesehen, mittels der die Verbindung zwischen dem Anschlussteil und dem Ventilgehäuse abgedichtet ist. Dies ermöglicht, das Anschlussteil dicht am Ventilgehäuse anzubringen, ohne dass das Anschlussteil gegen einen Anschlag geschraubt werden muss. Ein solcher Anschlag birgt wieder die Gefahr, dass durch Aufbringen eines übermäßig hohen Drehmoments eine Beschädigung des Ventilgehäuses resultiert.

Gemäß einer Ausführungsform ist vorgesehen, dass das Anschlussteil auf seiner Innenseite mit mindestens einer Rippe versehen ist, mittels der es mit dem Ventilgehäuse verschraubt werden kann. Die Rippe ermöglicht es, das Anschlussteil in das Ventilgehäuse einzuschrauben, auch wenn auf der Außenseite des Anschlussteils eine drehbare Überwurfmutter angebracht ist.

Die Erfindung wird nachfolgend anhand einer Ausführungsform beschrieben, die in den beigefügten Zeichnungen dargestellt ist. In diesen zeigen:
- Figur 1 in einer perspektivischen Ansicht ein Schlauchanschlussventil nach dem Stand der Technik;
- Figur 2 einen schematischen Schnitt durch das Ventil von Figur 1;
- Figur 3 einen Schnitt durch ein erfindungsgemäßes Schlauchanschlussventil; und
- Figur 4 in vergrößertem Maßstab den Ausschnitt IV von Figur 3.

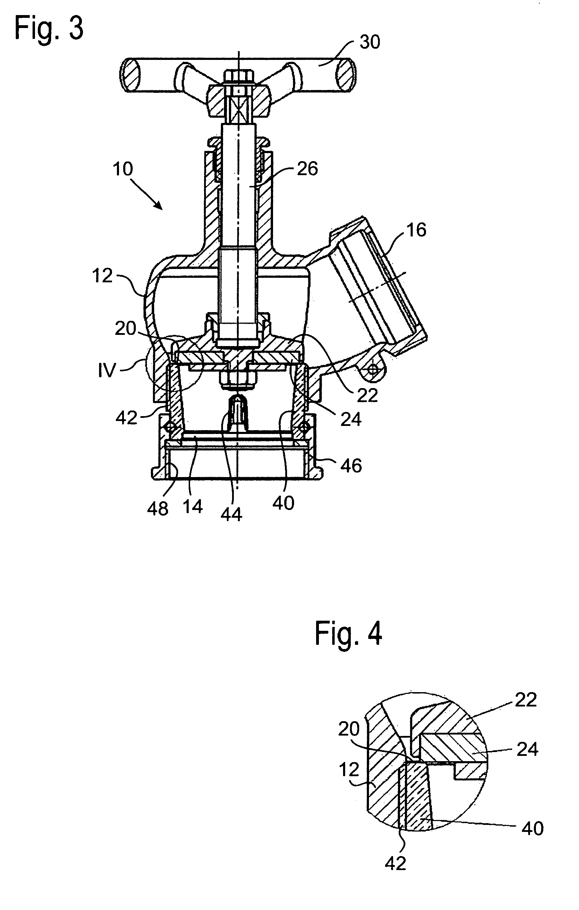

Anhand der Figuren 3 und 4 wird nun das erfindungsgemäße Schlauchanschlussventil erläutert. Für die von den Figuren 1 und 2 bekannten Bauteile werden dieselben Bezugszeichen verwendet, und es wird insoweit auf die obigen Erläuterungen verwiesen.

Der wesentliche Unterschied zwischen dem erfindungsgemäßen Schlauchanschlussventil und dem Schlauchanschlussventil gemäß dem Stand der Technik besteht darin, dass beim erfindungsgemäßen Schlauchanschlussventil kein Ventiloberteil 28 vorhanden ist. Stattdessen ist das Ventilgehäuse 12 einstückig ausgeführt und enthält die Aufnahme für die Ventilspindel 26. Der Ventilsitz 20 ist dagegen nicht mehr unmittelbar am Ventilgehäuse 12 ausgeführt, sondern ist durch eine (gegebenenfalls entsprechend bearbeitete) Stirnseite eines Anschlussteils 40 gebildet, das mit einem Außengewinde 42 versehen ist, welches in ein Innengewinde im Ventilgehäuse 12 eingeschraubt ist. Das Anschlussteil 40 ist allgemein ringförmig ausgebildet und weist auf seiner Innenfläche zwei einander gegenüberliegende Rippen 44 auf, mit denen das nötige Drehmoment aufgebracht werden kann, um das Anschlussteil 40 mit dem Ventilgehäuse 12 zu verschrauben. Auf der Außenseite des Anschlussteils 40 ist ferner eine Überwurfmutter 46 drehbar angebracht, mit der das Schlauchanschlussventil 10 an einen Wasseranschluss angeschlossen werden kann.

Zum Einschrauben des Anschlussteils 40 in das Ventilgehäuse 12 wird insbesondere eine Klebeverbindung verwendet, welche die Verbindung zwischen dem Anschlussteil 40 und dem Ventilgehäuse 12 abdichtet. Außerdem ist kein fester Anschlag im Ventilgehäuse 12 vorgesehen, gegen den das Anschlussteil 40 geschraubt werden kann. Dies verhindert, dass beim Einschrauben des Anschlussteils eine übermäßig hohe Kraft aufgebracht wird, die potenziell zu Spannungsrisskorrosion führen könnte.

Alternativ zum Verschrauben des Anschlussteils 40 mit dem Ventilgehäuse 12 kann jede andere geeignete Verbindung verwendet werden, mit der das Anschlussteil 40 in axialer Richtung fest sowie dicht am Ventilgehäuse 12 angebracht werden kann.

## Patentansprüche

1. Schlauchanschlussventil (10) mit einem einstückigen Ventilgehäuse (12), einer Ventilspindel (26), die im Ventilgehäuse (12) angebracht ist, einem Ventilteller (22), der an der Ventilspindel (26) angebracht ist, und einem Ventilsitz (20), mit dem der Ventilteller (22) zusammenwirken kann, wobei der Ventilsitz (20) an einem Anschlussteil (40) gebildet ist, das am Ventilgehäuse (12) angebracht ist.

2. Schlauchanschlussventil (10) nach Anspruch 1, **dadurch gekennzeichnet, dass** das Anschlussteil (40) den Ventileingang (14) bildet.

3. Schlauchanschlussventil (10) nach Anspruch 1 oder Anspruch 2, **dadurch gekennzeichnet, dass** das Anschlussteil (40) am Ventilgehäuse (12) durch eine Formschlussverbindung angebracht ist.

4. Schlauchanschlussventil (10) nach Anspruch 3, **dadurch gekennzeichnet, dass** das Anschlussteil (40) mit dem Ventilgehäuse (12) verschraubt ist.

5. Schlauchanschlussventil (10) nach Anspruch 4, **dadurch gekennzeichnet, dass** das Ventilgehäuse (12) ein Innengewinde aufweist, in das das Anschlussteil (40) eingeschraubt ist.

6. Schlauchanschlussventil (10) nach einem der Ansprüche 3 bis 5, **dadurch gekennzeichnet, dass** eine Klebeverbindung vorgesehen ist, mittels der die Verbindung zwischen dem Anschlussteil (40) und dem Ventilgehäuse (12) abgedichtet ist.

7. Schlauchanschlussventil (10) nach einem der Ansprüche 4 bis 6, **dadurch gekennzeichnet, dass** das Anschlussteil (40) auf seiner Innenseite mit mindestens einer Rippe (44) versehen ist, mittels der es mit dem Ventilgehäuse (12) verschraubt werden kann.

8. Schlauchanschlussventil (10) nach einem der Ansprüche 1 bis 3, **dadurch gekennzeichnet, dass** das Anschlussteil (40) mittels eines Kugellagers mit dem Ventilgehäuse (12) verbunden ist.

9. Schlauchanschlussventil (10) nach einem der vorhergehenden Ansprüche, **dadurch gekennzeichnet, dass** das Anschlussteil (40) mit einem Anschlussgewinde (48) versehen ist, mit dem es an eine Leitung angeschlossen werden kann.

10. Schlauchanschlussventil (10) nach Anspruch 9, **dadurch gekennzeichnet, dass** das Anschlussgewinde (48) an einer Überwurfmutter (46) gebildet ist, die auf dem Anschlussteil (40) angeordnet ist.
